# EUROPEAN PATENT APPLICATION

(11) **EP 2 009 624 A1**
(43) Date of publication of application: **31.12.2008**
(21) Application number: 08011584.3
(22) Date of filing: 26.06.2008
(51) Int. Cl.: G11B 5/855, G11B 5/86, G11B 5/596

(54) **Method for producing magnetic recording medium, magnetic recording medium produced by the production method, and mold structure for use in the production method**

(30) Priority: 29.06.2007 JP 2007173144
(71) Applicant: FUJIFILM CORPORATION, Minato-ku Tokyo 106-8620 (JP)
(72) Inventor: Nishikawa, Masakazu, Odawara-shi Kanagawa (JP); Yasunaga, Tadashi, Odawara-shi Kanagawa (JP); Nishida, Yoichi, Odawara-shi Kanagawa (JP)
(74) Representative: HOFFMANN EITLE

(57) **Abstract**

The present invention provides a method for producing a magnetic recording medium having servo areas and data areas using a mold structure. The method includes at least forming an imprint resist layer on a substrate surface of a magnetic recording medium, forming a convexo-concave pattern in the imprint resist layer by pressing convex portions of the mold structure against the imprint resist layer, and transferring magnetism to the servo areas in the magnetic recording medium by applying a magnetic field via the mold structure, wherein the imprint resist layer is formed only on areas of the substrate surface corresponding to the data areas in the magnetic recording medium, and the magnetic field is applied to areas of the substrate surface corresponding to the servo areas, with the areas of the substrate surface corresponding to the servo areas being in contact with convex portions of the mold structure.

## Description

### BACKGROUND OF THE INVENTION

### Field of the Invention

The present invention relates to a method for producing a magnetic recording medium, a magnetic recording medium produced by the production method, and a mold structure for use in the production method.

### Description of the Related Art

In recent years, as magnetic recording media that have an increased recording density, in place of conventional magnetic recording media having a continuous magnetic layer, DTM (discrete track media) and BPM (bit patterned media) are proposed in which a magnetic layer is patterned (see, for example, Japanese Patent Application Laid-Open (JP-A) No. 09-97419 and JP-A No.2006-120299). For patterning a magnetic layer, a mask layer having a desired pattern is generally used. As a method for producing a mask layer, nanoimprint lithography (NIL) is proposed, in which a resist is applied to an object to be processed, a mold that has been prepared by processing a base surface in a desired pattern is pressed against the resist-coated object to form a desired resist pattern.

As described above, in nanoimprint lithography (NIL) proposed as a method for producing a magnetic recording medium, a mold that has been processed in a desired pattern is pressed against a resist. For this purpose, in preparation of DTM, the mold pattern is composed mainly of a concentric convexo-concave pattern constituting data areas and of a convexo-concave pattern constituting servo areas. The pattern for servo areas plays a role in controlling address information for each recording signal and is composed of different patterns in form. Therefore, the resist pattern shape after being pressed by a mold can be different from an intended shape, since the cross-section area, the depth or the like of patterns are different between the data areas and the servo areas and the pressure received by the resist is uneven. Furthermore, in preparation of BPM, since data areas are composed of a group of discrete bits (concavities), in the data areas, higher formability of resist pattern is requested. Specifically, the thickness of a resist remained (residue) after the pressure being applied to the resist layer by convex portions of the mold is uneven between the data areas and the servo areas and more specifically, the thickness of the resist between internal structures of the servo areas is uneven, resulting in uneven mask property. When the mask property becomes uneven, patterning of the magnetic layer also becomes uneven, resulting in inability to produce DTM and BPM having desired properties.

Thus, it is difficult to maintain appropriate property of nanoimprint lithography (NIL) in servo areas while ensuring appropriate property of nanoimprint lithography (NIL) in data areas.

Furthermore, signals in servo areas are sensing signals, which are different from those in data areas, therefore it is difficult to use an advanced signal processing method, and there is a need to secure a signal integrity, a signal-to-noise (S/N) ratio, for signals. However, for the signals in the servo areas, information is recorded depending on the presence or absence (1/0) of a magnetic layer, the S/N ratio is reduced by half (- 6 dB) as compared to conventional signals, which results in degradation of the servo accuracy and a great impediment to increase the recording density.

Particularly in DTM, information is recorded depending on the presence or absence (1/0) of a magnetic layer in servo areas, whereas in data areas, information is recorded by two magnetizations (1/ -1) in opposing directions to each other in the magnetic layer. A difference in signal amplitude between the servo areas and the data areas caused by a difference in recording method of the information is corrected by signal processing (see, for example, JP-A No. 2006-65918).

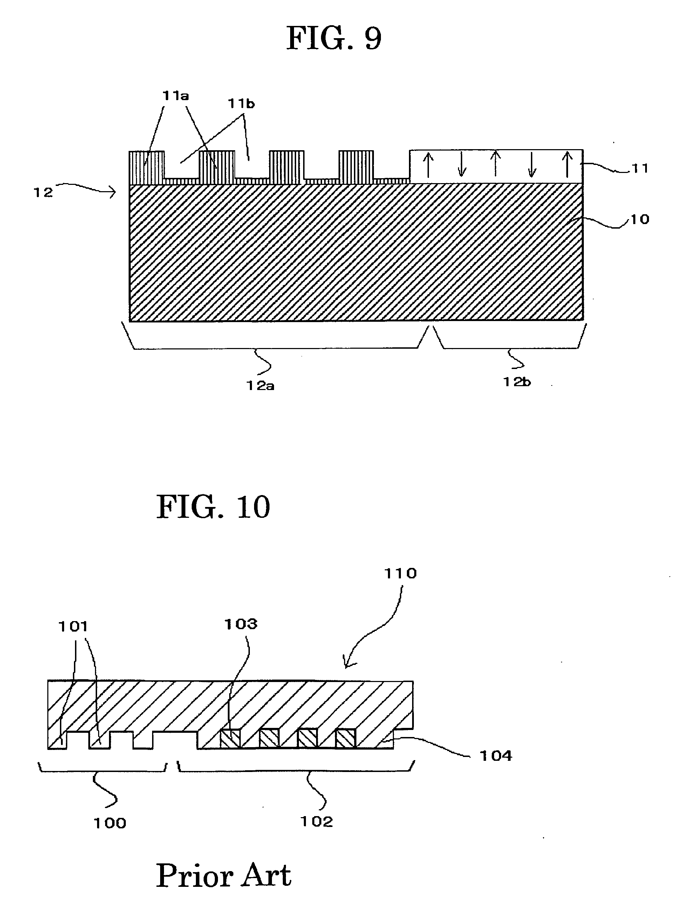

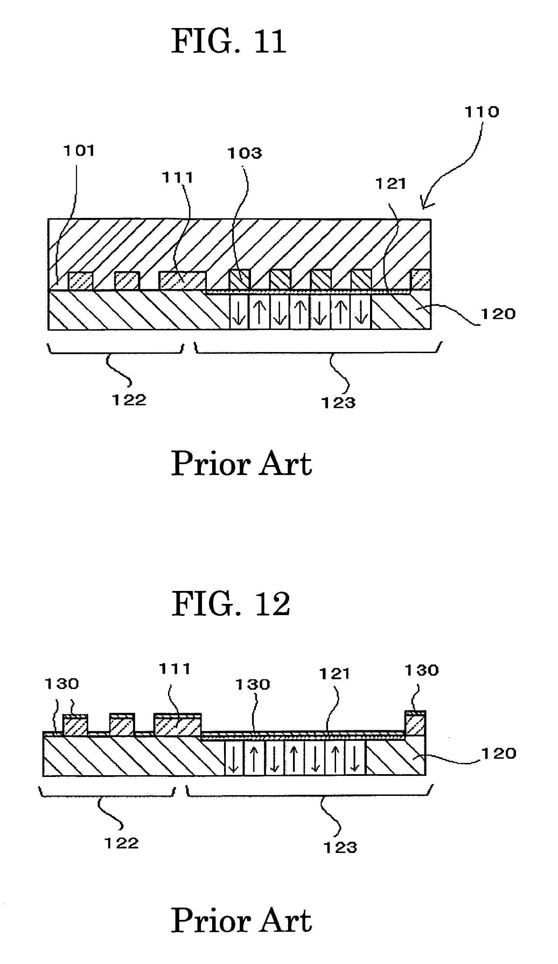

A technical idea that in order to maintain an S/N of signals in the servo areas, servo signals are recorded by magnetic transfer method, has been disclosed in JP-A No.2006-216200, as a prior art reference. In such a conventional method, a magnetic recording medium is produced using a metal mold 110 (FIG. 10) having a convex portion 101 in an area 100 corresponding to a data area (122 in FIG.11 described later) and a large flat convex portion 104 in which a magnetic layer 103 is embedded in an area 102 corresponding to a servo area (123 in FIG.11 described later). When the metal mold 110 is pressed against a magnetic recording medium 120 coated with a resist 111, an excess amount of resist residue 121 may remain between the large flat convex portion 104 and the magnetic recording medium 120, and the distance between the large flat convex portion 104 of the metal mold 110 and the magnetic recording medium 120 cannot be reduced, which makes it difficult to realize a favorable magnetic transfer state. A conclusion based on the magnetic transfer principle obtained from many years of experiments on magnetic transfer techniques is that in order to realize a favorable magnetic transfer state, a gap between a master and a slave needs to be controlled to be on the order of several tens nanometers throughout the entire surface of the discs.

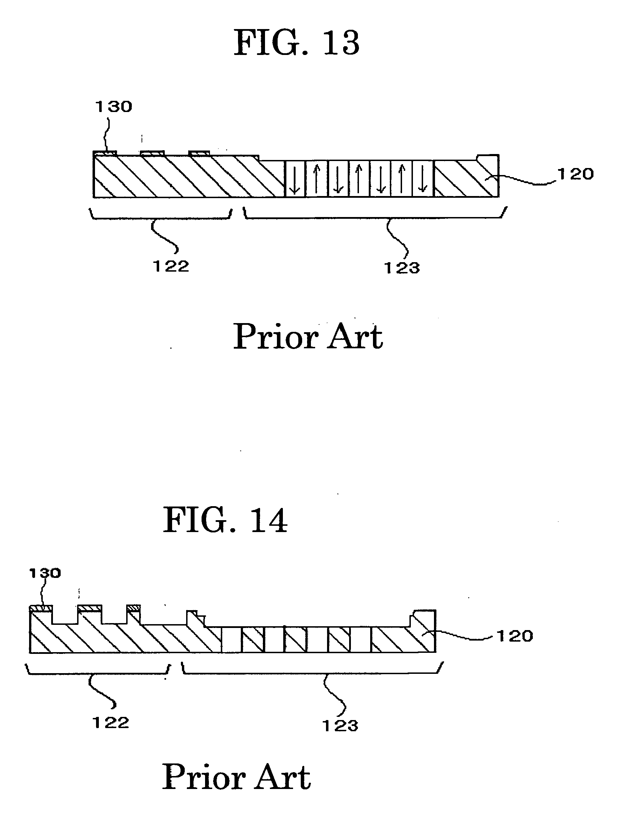

The shapes of one of the data areas 122 and one of the servo areas 123 are processed by a metal film coating process (FIG. 12) for coating with a metal film 130, a liftoff process (FIG. 13), and an etching step carried out after removal of a resist residue 121 and the metal film 130 formed on the data area 122 and the servo area 123. The cross-section of a pattern composed of the servo areas 123 is larger than the cross-section of a pattern composed of the data areas 122, and a larger amount of the resist residue 121 remains in the servo areas than in the data areas 122. As a result, parts of the metal film on the servo area 123, which must remain after the liftoff process, are removed (FIG.13). Since the parts of the metal film on the servo area 123 are removed, parts of a magnetic layer of the servo area 123 are etched (FIG.14) to cause degradation of properties of the magnetic layer (degradation of signal integrity due to reduction of film thickness) of one of the servo areas 123. In addition, since a minute height difference arises between one of the data areas 122 and one of the servo areas 123 by etching (FIG. 14), there are grave concerns about damages on the disc drive caused by the magnetic recording medium, because when a head of a disc drive moves on the servo area 123, air current is disturbed, leading to an unstable state of head fly and damage of the head and the medium.

### BRIEF SUMMARY OF THE INVENTION

The present invention aims to solve the prior art problems and achieve the following objects. Specifically, objects of the present invention are to provide a method for producing a magnetic recording medium that can stably produce next-generation magnetic recording media that have excellent signal integrity of servo areas, and to provide a magnetic recording medium produced by the production method, and a mold structure used in the production method.

The following are means for solving the aforementioned problems. Namely:
<1> A method for producing a magnetic recording medium having servo areas and data areas using a mold structure having a plurality of convex portions, the method, including: forming an imprint resist layer on a surface of a substrate for the magnetic recording medium, forming a convexo-concave resist pattern in the formed imprint resist layer by pressing the plurality of convex portions of the mold structure against the imprint resist layer, and transferring magnetism to the servo areas in the magnetic recording medium by applying a magnetic field to the servo areas via the mold structure, wherein in the forming of the imprint resist layer the imprint resist layer is restricted to a substrate surface corresponding to the data areas in the magnetic recording medium, and in the transferring of magnetism the magnetic field is applied to a substrate surface corresponding to the servo areas in the magnetic recording medium with the substrate surface corresponding to the servo areas being in contact with convex portions of the mold structure.
<2> The method for producing a magnetic recording medium according to the item <1>, wherein in the transferring of magnetism, the magnetic field is applied to the servo areas and the data areas via the mold structure.
<3> The method for producing a magnetic recording medium according to the item <2>, wherein in the transferring of magnetism, the magnetic field is applied to the servo areas and the data areas via the mold structure in a perpendicular direction to the surface of the magnetic recording medium.
<4> The method for producing a magnetic recording medium according to any one of the items <1> to <3>, further including: forming a second resist layer on the substrate surface corresponding to the servo areas in the magnetic recording medium.
<5> The method for producing a magnetic recording medium according to the item <4>, further including: forming a convexo-concave pattern on the substrate surface corresponding to the data areas in the magnetic recording medium based on the convexo-concave resist pattern formed in the imprint resist layer on the substrate surface corresponding to the data areas in the magnetic recording medium, using as a mask the second resist layer formed so as to coat the substrate surface corresponding to the servo areas in the magnetic recording medium.
<6> A magnetic recording medium produced by the method for producing a magnetic recording medium according to any one of the items <1> to <5>.
<7> A mold structure used in the method for producing a magnetic recording medium according to any one of the items <1> to <5>.

According to the present invention, it is possible to solve the prior art problems, to achieve the aforementioned objects, and to provide a method for stably producing a next-generation magnetic recording medium that has excellent signal integrity of servo areas, a magnetic recording medium produced by the production method, and a mold structure used in the production method.

### BREIF DESCRIPTION OF THE SEVERAL VIEWS OF THE DRAWINGS

FIG.1 is a cross-sectional view exemplarily showing a method for producing a magnetic recording medium according to the present invention.

FIG.2 is a cross-sectional view exemplarily showing a method for producing a magnetic recording medium according to the present invention.

FIG.3 is a partial perspective view exemplarily showing the structure of a mold structure according to the present invention.

FIG.4A is a cross-sectional view exemplarily showing a method for producing a mold structure according to the present invention.

FIG.4B is a cross-sectional view exemplarily showing a method for producing a mold structure according to the present invention.

FIG.5 is a cross-sectional view exemplarily showing a method for producing a magnetic recording medium according to the present invention.

FIG.6 is a cross-sectional view exemplarily showing a method for producing a magnetic recording medium according to the present invention.

FIG.7 is a cross-sectional view exemplarily showing a method for producing a magnetic recording medium according to the present invention.

FIG.8 is a cross-sectional view exemplarily showing a method for producing a magnetic recording medium according to the present invention.

FIG.9 is a cross-sectional view exemplarily showing a method for producing a magnetic recording medium according to the present invention.

FIG. 10 is a cross-sectional view showing a conventional method for producing a magnetic recording medium.

FIG.11 is a cross-sectional view showing a conventional method for producing a magnetic recording medium.

FIG. 12 is a cross-sectional view showing a conventional method for producing a magnetic recording medium.

FIG. 13 is a cross-sectional view showing a conventional method for producing a magnetic recording medium.

FIG. 14 is a cross-sectional view showing a conventional method for producing a magnetic recording medium.

### DETAILED DESCRIPTION OF THE INVENTION

Hereinafter, the method for producing a magnetic recording medium and the magnetic recording medium according to the present invention will be described with reference to the drawings.

### (Method for producing magnetic recording medium)

The method for producing a magnetic recording medium according to the present invention includes at least an imprint resist forming step, a convexo-concave resist pattern forming step and a magnetism transfer step, and further includes other steps such as a resist applying step, a magnetic layer patterning step, and a resist removing step as required.

The magnetic recording medium according to the present invention is produced by the method for producing a magnetic recording medium according to the present invention.

Hereinafter, the magnetic recording medium according to the present invention will also be described in detail through the description of the method for producing a magnetic recording medium according to the present invention.

### <Imprint resist forming step>

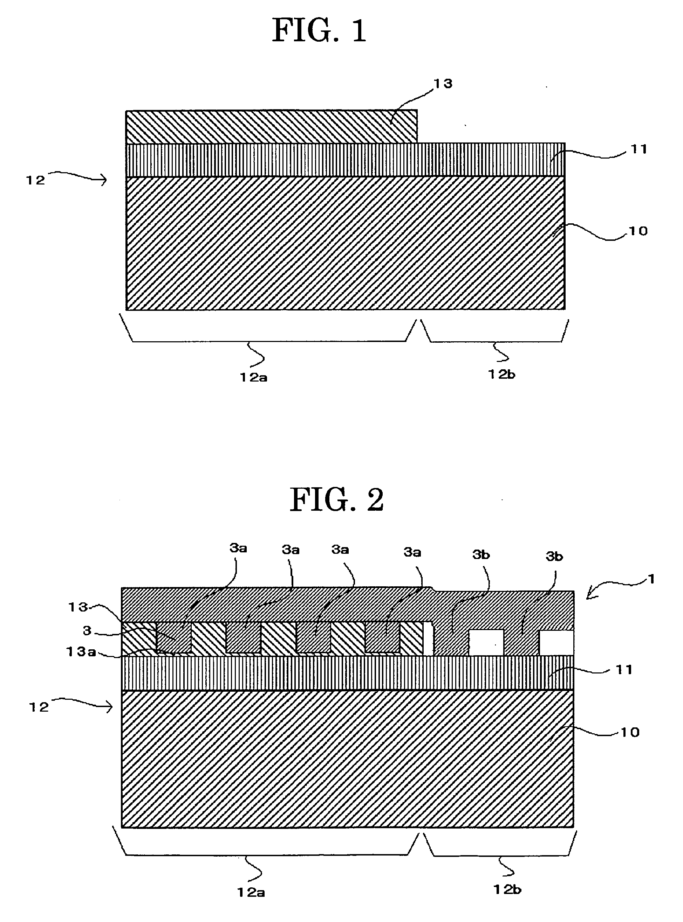

The imprint resist forming step is a step in which as shown in FIG.1, an imprint resist layer 13 is formed only in a data area 12a of a magnetic recording medium base 12 having a magnetic layer 11 on a surface (preferably on both sides of a substrate) of a substrate 10.

### - Substrate -

The shape, structure, size and material of the substrate 10 are not particularly limited and can be appropriately selected depending on the purpose; for example, when the magnetic recording medium is a magnetic disc in a hard disc and the like, it has a disc-shape. The structure of the substrate may be a single-layer structure or laminated structure. The material of the substrate may be appropriately selected from those known as substrate materials for magnetic recording media, and examples thereof include aluminum, glass, silicon, quartz and SiO₂/Si in which a thermally-oxidized film is formed on a silicon surface. These materials for substrate may be used alone or in combination of two or more.

### - Magnetic layer -

A material used for the magnetic layer 11 is not particularly limited, can be appropriately selected from those known in the art depending on the purpose, and preferred examples thereof include, Fe, Co, Ni, FeCo, FeNi, CoNi, CoNiP, FePt, CoPt and NiPt. These may be used alone or in combination of two or more.

The thickness of the magnetic layer 11 is not particularly limited, can be appropriately selected depending on the purpose, and is usually about 5 nm to 30 nm.

The method for forming the magnetic layer 11 is not particularly limited, the magnetic layer 11 can be formed by a known method, and examples of the method include sputtering method and electrodeposition (method).

A crystal orientation layer for orienting the magnetic layer and a soft magnetic undercoat layer may be formed as required between the substrate 10 and the magnetic layer 11. In particular the soft magnetic undercoat layer may be a single layer or laminate layer.

### - Imprint resist layer -

The imprint resist layer 13 is not particularly limited, can be appropriately selected from those known in the art depending on the purpose, and is, for example, a layer formed by coating a surface of the magnetic recording medium base 12 with an imprint resist composition (hereinafter it is sometimes referred to as "imprint resist solution") containing at least any one of a thermosetting resin and a photocurable resin. For materials of the imprint resist composition used for forming the imprint resist layer 13, novolac resins, epoxy resins, acrylic resins, organic glass resins, and inorganic glass resins are used. Note that in order to form the imprint resist layer 13 only on a data area 12a of the magnetic recording medium base 12, the imprint resist solution may be applied only to the data area 12a of the magnetic recording medium base 12, or the imprint resist solution may be applied not only to the data area 12a but also to the servo area 12b of the magnetic recording medium base 12 to form an imprint resist layer throughout the entire surface of the magnetic recording medium base 12 and then only the imprint resist layer formed on the servo area 12b of the magnetic recording medium base 12 may be removed.

### <Convexo-concave resist pattern forming step>

There are two main methods for forming a convexo-concave resist pattern. One method is thermal NIL, and the other method is photo-NIL.

The following is a description of the thermal NIL process.

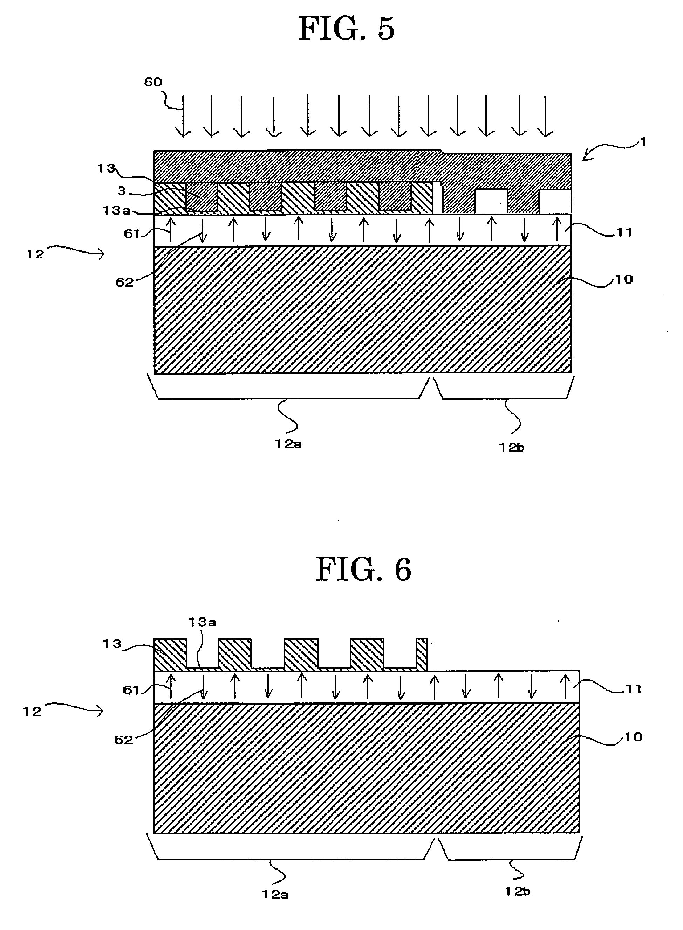

In the convexo-concave resist pattern forming step, as shown in FIG.2, a convexo-concave pattern is formed by pressing a plurality of convex portions 3 (convex portions 3a for a data pattern) of a mold structure 1 against an imprint resist layer 13 formed only on a data area 12a of a magnetic recording medium base 12. The temperature of the system is kept near the glass transition temperature (Tg) of the imprint resist solution, after the transfer of the pattern to the surface of the imprint resist layer, the temperature of the imprint resist layer 13 is controlled to be lower than the glass transition temperature (Tg) of the imprint resist solution to cure the imprint resist layer. After the imprint mold structure 1 is peeled off, a convexo-concave pattern is formed on the imprint resist layer 13 (FIG.6 described later).

### Meanwhile, the following is a description of photo-NIL.

In photo-NIL, a convexo-concave resist pattern is formed using a mold structure 1 composed of a material which has optical transparency and a strength to serve as a mold structure (for example, quartz (SiO₂) and organic resins (PET, PEN, polycarbonate and fluorine resins having a low-melting point)).

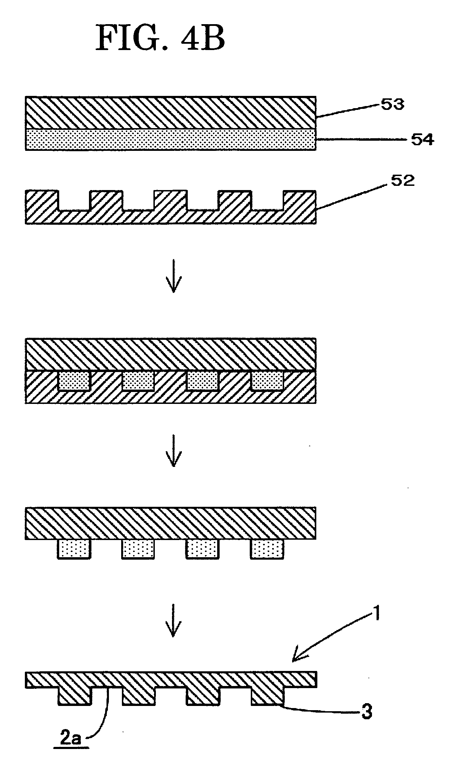

The description "a material has optical transparency" specifically means that as shown in FIG. 4B described later, when a light beam is incident from a certain surface of the master base 53 to be processed such that the light beam exits from at least the other surface of the master base 53 to be processed on which the imprint resist layer 54 has been formed, the imprint resist solution is sufficiently cured, and means that the light transmittance of light beam having a wavelength of 400 nm or less emitted from the certain surface to the other surface of the substrate is 50% or more.

Further, the description "a material has a strength to serve as a mold structure" means that the material has such a strength that it is peelable and can bear stress without being damaged when a mold structure is pressed against an imprint resist layer 13 formed on a magnetic recording medium base 12 under the condition of an average surface pressure of 1 kgf/cm² or more and the imprint resist layer is pressurized.

Then, the imprint resist layer 13 is irradiated with an ultraviolet ray to cure the transferred pattern. The pattern may be cured by exposing the imprint resist layer with ultraviolet ray even after the mold structure 1 is peeled off from the magnetic recording medium base 12 after patterning.

### «Mold structure»

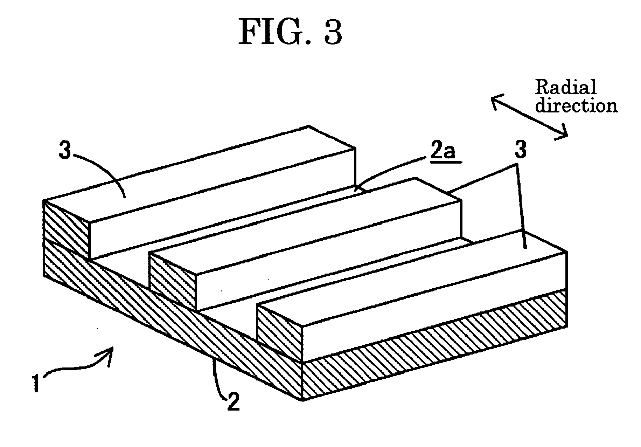

The mold structure 1 is not particularly limited, can be appropriately selected from those known in the art depending on the purpose, and is, for example, as shown in FIG. 3, provided with a plurality of convex portions 3 formed at a predetermined interval and further provided with other convexo-concave portions as required on one surface 2a (hereinafter, may be referred to as "reference surface 2a") of a disc-shaped master base 2. Note that the mold structure 1 needs to be composed of a ferromagnetic material at least in the vicinity of the outermost surfaces of convex portion so that magnetism can be transferred. The ferromagnetic material is composed of a metal or an alloy containing at least one selected from Fe, Co, Ni, Cr, Ta, W, Pt, Ru, O and the like. The master base itself having a convexo-concave pattern may be composed of a ferromagnetic material. In addition, in order to control magnetic anisotropy of the magnetic layer, an undercoat layer may be provided. In order to secure durability, a protective layer may be provided on the surface of the mold structure 1. This protective layer is preferably, for example, composed of a hard carbon material and has a thickness of about 2 nm to 10 nm.

Note that aforementioned convex portions 3 include data-pattern convex portions 3a corresponding to a data area 12a (FIG. 2) and servo-pattern convex portions 3b corresponding to a servo area 12b (FIG. 2). An area difference of convex portions between each of the data areas and each of the servo areas can be kept small by providing a convexo-concave pattern corresponding to servo signals in the servo-pattern convex portions 3b, in addition to the convexo-concave pattern provided in the data-pattern convex portions 3a. As a result, defective formation of convexo-concave resist patterns may be prevented, in which different pattern sizes and different patterns are mixed, which was a problem in NIL. As compared to the case where the metal mold described in JP-A No. 2006-216200 is used, the amount of resist residue 13a remaining between the mold structure 1 and the magnetic recording medium base 12 in nanoimprint lithography (NIL), especially the amount of resist residue in the servo area 123 can be reduced and a state where the resist residue remains almost even can be realized in the data area 12a of the magnetic recording medium base 12. In addition, in the present invention, since nanoimprinting and magnetic transfer are carried out in the absence of a resist in the servo areas, it is possible to prevent a residue remaining after nanoimprint lithography (NIL) in servo areas and degradation of the signal integrity of magnetically transferred signals caused by the residue.

### - Other members -

The other members are not particularly limited, can be appropriately selected depending on the purpose, as long as the use of them does not impair the effects of the present invention, and for example, a mold surface layer formed on a master base 2 and having a function of peeling off from an imprint resist layer 13 is exemplified.

### «Method for producing mold structure»

Hereinafter, a method for producing a mold structure 1 will be described, with reference to the drawings.

### - Preparation of original master -

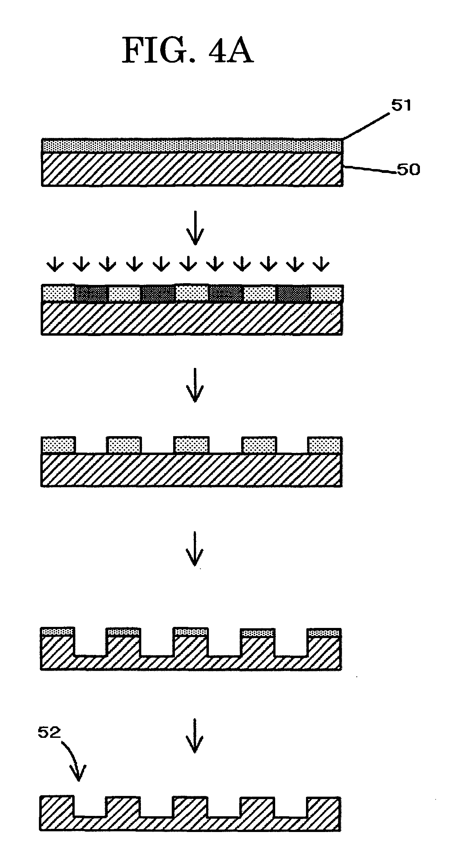

FIGS. 4A and 4B are cross-sectional views exemplarily showing a method for producing a mold structure 1. First, as shown in FIG. 4A, a photoresist solution, such as a novolac resin and an acrylic resin is applied onto an Si base 50 by spin coating or the like to form a photoresist layer 51.

Then the Si base 50 is irradiated with a laser beam (or an electron beam) that is modulated according to a servo signal with rotating the Si base 50 to expose a predetermined pattern at a corresponding part of each frame on tracks over the entire photoresist surface. The predetermined pattern is, for example, a pattern corresponding to a servo signal that extends linearly in a radial direction from the rotation center.

Subsequently, the photoresist layer 51 is developed to remove those portions exposed, the pattern of the photoresist layer 51 from which those portions have been removed is used as a mask and the Si base 50 is selectively etched by RIE to thereby obtain an original master 52 having convexo-concave patterns.

### - Preparation of mold structure -

For the method for producing the mold structure 1 using the original master 52, a plating method, a nanoimprint method and the like may be used.

The method for producing the mold structure 1 by plating method is described below.

First, a conductive layer (not shown) is formed on a surface of the original master 52. For a method for forming the conductive film, a vacuum film-forming method (such as sputtering and vapor deposition), a nonelectrolytic plating method and the like may be generally used. For a material used for the conductive layer, a metal or an alloy containing at least one selected from Ni, Cr, W, Ta, Fe and Co may be used. Ni, Co and an alloy of FeCo are desirable. A nonmetal material having conductive property, such as TiO, may also be used as a conductive layer. The thickness of the conductive layer is in the range of 5 nm to 30 nm. The range of 10 nm to 25 nm is more desirable.

Onto the original master with the conductive layer formed on the surface thereof, a metal material or an alloy material is deposited by plating method until a plated base has a predetermined thickness, and then the plated base is peeled off from the original master 52, thereby forming the mold structure 1. For the plating material used for the mold structure 1, Ni, Cr, an alloy of FeCo and the like may be used, and an Ni material is preferably used. The thickness of the mold structure 1 after the plated base being peeled off is in the range of 30 µm to 500 µm, and preferably in the range of 45 µm to 300 µm. When the thickness is 30 µm or less, the rigidity of the mold structure 1 is reduced, and sufficient mechanical property cannot be secured. In addition, use of the mold structure multiple times in NIL makes the mold structure 1 itself deform, resulting in a significant degradation of properties in practical use. When the thickness is 500 µm or more, the rigidity of the mold structure 1 becomes too high to secure tight adhesion between the mold structure 1 and the magnetic recording medium at the time of transfer of magnetism in NIL. In order to secure the tight adhesion, an adhesion pressure therebetween needs to be increased, and thus a fatal pattern defect may occur in the mold structure 1 and/or the magnetic recording medium when a contaminant is incorporated thereinto.

The mold structure 1 may be reproduced using the above mentioned mold as the original master 52.

The method for producing the mold structure 1 by nanoimprint method is described below.

As shown in FIG. 4B, an imprint resist solution containing a thermoplastic resin or a photocurable resin is applied onto one surface of a master base to be processed 53 to form an imprint resist layer 54, and then the original master 52 is pressed against the imprint resist layer 54 to transfer the convex portion pattern formed in the surface of the original master 52 to the imprint resist layer 54.

A material used for the master base 53 to be processed is not particularly limited, can be appropriately selected depending on the purpose, as long as it has optical transparency and has a strength to serve as a mold structure, and examples thereof include quartz (SiO₂) and organic resins (PET, PEN, polycarbonate and fluorine resins having a low-melting point).

The description "a material has optical transparency" specifically means that when a light beam is incident from a certain surface of the master base 53 to be processed such that the light beam exits from the other surface on which the imprint resist layer 54 has been formed, the imprint resist solution is sufficiently cured, and means that the light transmittance of light beam having a wavelength of 400 nm or less emitted from the certain surface to the other surface of the master base 53 to be processed is 50% or more.

Further, the description "a material has a strength to serve as a mold structure" means that the material has such a strength that it is peelable and can bear stress without being damaged when a mold structure is pressed against an imprint resist layer 13 formed on a magnetic recording medium base 12 under the condition of an average surface pressure of 1 kgf/cm² or more and the imprint resist layer is pressurized.

### - Curing step -

Then, the transferred pattern is cured by applying heat or ultraviolet ray to the imprint resist layer 54. When the pattern is cured by exposure to an ultraviolet ray, it may be exposed to ultraviolet ray and cured after the mold structure is peeled off from the magnetic recording medium after patterning.

### - Pattern forming step -

Subsequently, the master base was selectively etched by RIE or the like while using the transferred pattern as a mask, thereby obtaining a mold structure 1 having a convexo-concave pattern. Furthermore, an inorganic material may be formed on the surface of the master base to form a mask of the inorganic material based on the resist mask, and the master base may be etched using this inorganic material mask to form the mold structure 1.

### <Forming step of magnetism-transfer magnetic layer>

Next, on the surface of the mold structure 1 formed by the above steps, a magnetic layer for magnetism transfer is formed. For the forming method of the magnetism-transfer magnetic layer, a vacuum film-forming method (sputtering, vapor deposition and the like), a plating method and the like may be used. As a material used for the magnetism-transfer magnetic layer, a metal or an alloy containing at least one selected from Fe, Co, Ni, Cr, Pt, B, W and Ta may be used. FeCo alloys, FeCoNi alloys and the like having high saturation magnetization are desirable.

The thickness of the magnetic layer is in the range of 10 nm to 200 nm. The range of 50 nm to 150 nm is more desirable.

Furthermore, the mold structure 1 may be formed using a material used for the magnetism transfer magnetic layer.

### <Magnetism transfer step>

In the magnetism transfer step, an initialization magnetic field is previously applied to the magnetic recording medium base 12 (slave disc) such that a magnetic flux is applied in a perpendicular direction to the surface of the substrate 10 and the surface of the substrate is uniformly magnetized in one direction. In this step, a predetermined magnetic field 60 is applied to the initialized magnetic recording medium base 12 (slave disc) in the reverse direction to the initialization magnetic field via the mold structure 1 (FIG.5), and a desired signal is magnetically recorded and transferred to the magnetic layer 11 corresponding to the servo area 12b and the data area 12a so that magnetization 61 orients in a positive direction and magnetization 62 in a negative direction. The predetermined magnetic field 60 is composed of a transfer magnetic field in the opposite direction to the initialization magnetic field.

The predetermined magnetic field 60 is applied to the imprint mold structure 1, which leads the magnetic flux in the direction perpendicular to the surface of the substrate 10, and magnetic information corresponding to a convexo-concave pattern is recorded on a magnetic recording medium.

In the transferring of magnetism, the predetermined magnetic field 60 is applied with convex portions 3b for servo pattern being in close contact with the magnetic layer 11 corresponding to the servo area 12b (FIG. 5), and thus high quality magnetic signals can be recorded and transferred with certainty on areas of the magnetic layer 11 corresponding to the servo area 12b.

There are two methods of magnetism transfer using the mold structure 1 (master disc) (not shown): in a first method, the mold structure 1 (master disc) is pressed against one side of the magnetic recording medium base 12 (slave disc) to transfer magnetism on the one side, and in a second method, a pair of mold structures 1 (master discs) is moved closer to and pressed against both sides of the magnetic recording medium base 12 (slave disc) to transfer magnetism to the both sides at a time.

### <Resist coating step>

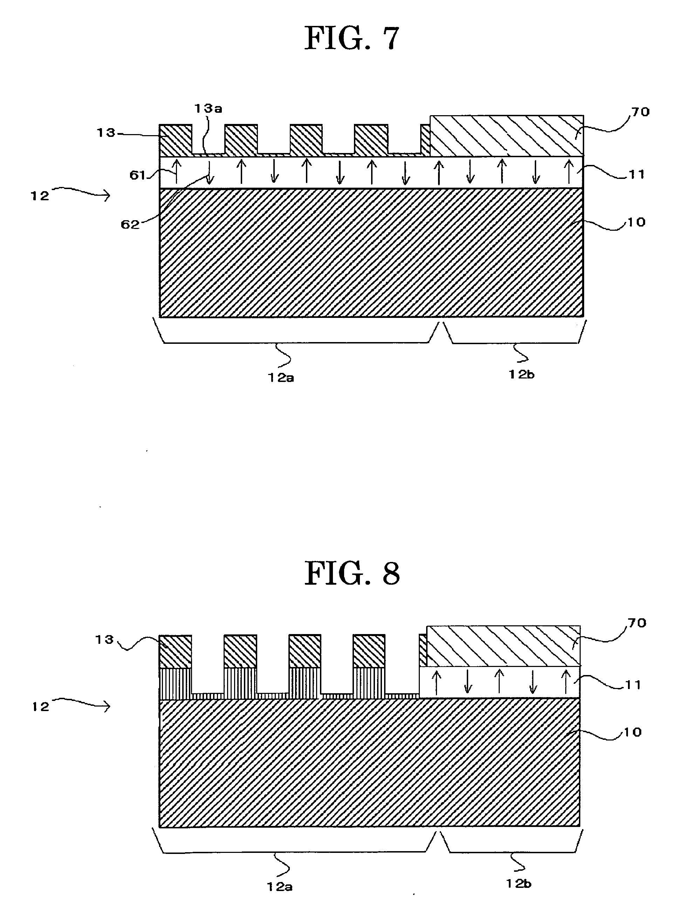

The resist coating step is a step, as shown in FIG.7, of coating an area of the magnetic layer 11 corresponding to a servo area 12b with a resist layer 70 (second resist layer). For the coating method, a peel coat method, a photolithographic method using a mask and an ink-jet method may be used.

### - Resist layer -

For a material used for the resist layer 70, at least one selected from novolac resins, epoxy resins, acrylic resins, organic glass resins, inorganic resins and the like may be preferably used, similarly to the material used for the imprint resist composition. A material insoluble in a solvent used in the imprint resist may be used.

### <Magnetic layer patterning step>

The magnetic layer patterning step is a step, as shown in FIG.8, of forming a convexo-concave pattern on a magnetic layer 11 corresponding to a data area 12a based on a convexo-concave resist pattern formed in the imprint resist layer 13 corresponding to the data area 12a, using as a mask the resist layer 70 coating a magnetic layer 11 corresponding to a servo area 12b. For a method for forming the convexo-concave pattern, such a technique as ion beam etching, RIE or wet etching may be used. Ar gas may be used as a process gas for ion beam etching, and CO plus NH₃, a chlorine gas and the like may be used as an etchant for RIE.

Since a part of the magnetic layer corresponding to the data area 12a is removed by etching in the magnetic layer patterning step, magnetism transferred to the data area 12a (magnetization 61 and 62) disappears or attenuates.

### <Resist removing step>

The resist removing step is a step, as shown in FIG.9, of removing the imprint resist layer 13 on convex portions 11a of the magnetic layer 11. For the removing method, a permeation method using a solvent capable of dissolving a resist, a reactive ion etching method or the like may be used. In the permeation method, an ultrasonic wave may be applied to the imprint resist layer 13 to accelerate the removal of the resist.

### <Other steps>

For the other steps, for example, a step of embedding nonmagnetic material such as SiO₂, carbon, alumina, polymer such as polymethylmethacrylate (PMMA) or polystyrene (PS), or a smooth oil in concave portions 11b of the magnetic layer, a step of smoothing the surface of the magnetic layer, a step of forming a protective layer on the smoothed surface with DLC (diamond-like carbon) or the like, and a final step of applying a lubricant oil are exemplified.

### (Magnetic recording medium)

The magnetic recording medium according to the present invention is produced by the method for producing a magnetic recording medium described above, and, as shown in FIG.9, servo signals in the servo area 12b are formed of magnetization 61 that is oriented in a positive direction and magnetization 62 that is oriented in a negative direction. In addition, the dimensional tolerance of a convexo-concave pattern formed in the data area 12a is 15 nm (3σ) or less. Note that "3σ" means a value of 3σ of the width of convex portions of the magnetic layer constituting the data area 12a.

Furthermore, the magnetic recording medium produced by the method for producing the magnetic recording medium of the present invention is preferably at least any one of a discrete magnetic recording medium and a patterned magnetic recording medium.

### EXAMPLES

Hereinafter, the present invention will be described in detail with reference to specific Examples below; however the scope of the present invention should not be construed as limiting thereto.

### (Example 1)

### <Preparation of mold>

### - Preparation of original master -

An electron beam resist was applied onto an 8-inch Si wafer by spin coating to form a layer of 100 nm in thickness. A desired pattern of the electron beam resist was exposed and developed using a rotary electron beam exposing device to produce a resist Si base having a convexo-concave pattern. The resist Si base having the convexo-concave pattern was subjected to a reactive ion etching treatment using the convexo-concave resist as a mask to form the convexo-concave pattern on the Si base. A remaining resist was removed by washing with a solvent capable of dissolving the resist, and the Si base was dried to thereby obtain an original master.

The pattern used was broadly classified into data areas and servo areas. The data areas were formed in a pattern composed of convex portions each having a convex width of 90 nm and concave portions each having a concave width of 30 nm (TP=120 nm). Each of servo areas had a basic signal length of 80 nm, the total number of sectors was 120, and each of the servo areas was composed of a preamble area (40 bit), a servo mark area (6 bit), a Sector Code area (8 bit), a Cylinder Code area (32 bit) and a burst area (Burst pattern). The servo mark identification code is "001010", and Sector Code areas were binary, and for Cylinder Code areas, a Gray conversion method is used. For Sector and Cylinder Code areas, a Manchester conversion was used. For the burst areas, commonly used 4 bursts (each burst is 16 bit) were employed.

### - Preparation of mold intermediate member by plating

Over the surface of the original master, an Ni conductive film of 20 nm in thickness was formed by sputtering. The original master coated with the conductive film was soaked in a nickel sulfamate bath to form an Ni film of 200 µm in thickness by electrolytic plating, and the Ni film was peeled off from the Si original master and washed to obtain a mold intermediate member by plating.

### - Method for forming magnetism transfer magnetic layer

An FeCo30 atom% magnetic layer of 100 nm in thickness was formed on a surface of the mold intermediate member by sputtering to obtain a mold.

### <Preparation of perpendicular magnetic recording medium>

A perpendicular magnetic recording medium was produced on a 2.5 inch glass substrate according to the following method. The produced perpendicular magnetic recording medium was provided with at least, a soft magnetic layer, a first nonmagnetic orientation layer, a second nonmagnetic orientation layer, a magnetic recording layer (magnetic layer), a protective layer and a lubricant layer formed in this order. The soft magnetic layer, the first nonmagnetic orientation layer, the second nonmagnetic orientation layer, the magnetic recording layer and the protective layer were prepared by sputtering, and the lubricant layer was prepared by dipping method.

For the material used for the soft magnetic layer, CoZrNb was laminated to form a layer of 100 nm in thickness. Specifically, the glass substrate was set so as to face the CoZrNb target, then an Ar gas was injected such that the pressure was 0.6 Pa, and the soft magnetic layer was formed at 1,500 W (DC).

For the first nonmagnetic orientation layer, Ti was sputtered to form a layer of 5 nm in thickness, and for the second nonmagnetic orientation layer, Ru was sputtered to form a layer of 6 nm in thickness. The first nonmagnetic orientation layer was set so as to face the Ti target, then an Ar gas was injected such that the pressure was 0.5 Pa, and the Ti seed layer was formed with a DC discharge (1,000 W) so as to have a thickness of 5 nm. The first nonmagnetic orientation layer formed over the substrate was set so as to face the Ru target, then an Ar gas was injected such that the pressure was 0.8 Pa, and the second nonmagnetic orientation layer composed of Ru was formed with a DC discharge (900 W) so as to have a thickness of 6 nm.

Further, for a recording layer, CoCrPtO was sputtered to form a layer of 18 nm in thickness. Specifically the second nonmagnetic orientation layer formed over the substrate was set so as to face the CoPtCr target, then an Ar gas containing O₂ at 0.06% was injected such that the pressure was 14 Pa, and the recording layer was formed with a DC discharge (290 W). The magnetic layer formed over the substrate was set so as to face the C target, then an Ar gas was injected such that the pressure was 0.5 Pa, and a C protective layer of 4 nm in thickness was formed with a DC discharge (1,000 W). The coercive force of the perpendicular magnetic recording medium was 334 kA/m (4.2 kOe).

### - Nanoimprinting, magnetism transfer step and magnetic layer patterning -

Before the nanoimprinting step, the perpendicular magnetic recording medium was initialized. A novolac resist (Microresist company; mr-I7000E) was applied over the surface of the perpendicular magnetic recording medium by spin coating at 3,600 rpm so as to have a thickness of 100 nm.

An epoxy resist (SU-8-2, MicroChem Corp.) was applied on the applied novolac resist by spin coating at 3,600 rpm so as to have a thickness of 10 nm.

Using as a mask a Cr film that had been applied on areas corresponding to sectors of servo signals (which had been removed from areas corresponding to data areas), the recording medium that had been coated with the resists was exposed to an ultraviolet ray and developed. Since the epoxy resist is a negative resist, the resists remain on the areas other than the servo frames (the exposed areas). The recording medium with the resists remaining on the areas other than the servo frames was soaked in acetone for 20 seconds to remove the novolac resist (Microresist company; mr-I7000E) remaining on the servo areas.

The mold was set so as to face the perpendicular magnetic recording medium that had been coated with the resist, the perpendicular magnetic recording medium was heated at 110°C, then the mold was pressed against the perpendicular magnetic recording medium at a pressure of 1.5 MPa for 30 sec for adhesion, and a magnetic field was applied to carry out magnetism transfer. The magnetic intensity used for the magnetism transfer was 4.6 kOe. After the magnetic field was applied, the mold was peeled off from the perpendicular magnetic recording medium.

SU-8 (MicroChem Corp.) as a resist layer (resist layer 70 in FIG.7) was bonded to servo areas with a peel coat.

After the mold was peeled off from the perpendicular magnetic recording medium, a resist residue remaining in the imprinted portion in the perpendicular magnetic recording medium was removed with O₂ RIE.

After the resist residue was removed, the magnetic layer was processed to form a convexo-concave pattern. To form the convexo-concave pattern in the magnetic layer, an ion beam etching method was employed using an Ar gas. After the convexo-concave pattern of the magnetic layer was formed, the remaining resist layer was removed with O₂ RIE, and a PFPE lubricant was applied to form a layer of 2 nm in thickness by dipping method.

### (Comparative Example 1)

A magnetic recording medium of Comparative Example 1 was produced in the same manner as in Example 1, except that the mold was not patterned in the servo areas which were made flat (as in a method according to JP-A No.2006-216200).

### (Comparative Example 2)

A magnetic recording medium of Comparative Example 2 was produced in the same manner as in Example 1, except that a resist layer was formed in the servo areas at the same time as in the data areas, and the mold is pressed against the resist layer formed in the servo areas as well as in the data areas while transferring magnetism via the mold.

### <Evaluation method>

The following evaluations were carried out on each of the intermediate members of each of the prepared perpendicular magnetic recording media that the magnetic layer had not yet been processed and the prepared perpendicular magnetic recording media.

### - (1) Signal integrity of servo signal -

On the prepared perpendicular magnetic recording media in which each of the magnetic layers had been processed, reproduction output powers of TAA (Track Average Amplitude) of the preamble area and burst area were detected for all the sectors. For an evaluation apparatus, LS-90 (manufactured by Kyodo Denshi, K.K.) was used. A GMR head having a read width of 120 nm and a write width of 200 nm was mounted to the apparatus.

In each of the perpendicular magnetic recording media, points were measured for reproduction output powers of TAA at 1 mm intervals in a radial direction from a radius of 20 mm to a radius of 32mm of the recording medium to calculate the average reproduction output power for the preamble area and the burst area. When the ratio of the average output power of the burst areas to the average output power of the preamble areas was in the range of 0.8 to 1.0, the signal integrity of servo signals was evaluated as "A"; when the ratio was in the range of 0.6 or more to less than 0.8, the signal integrity of servo signals was evaluated as "B"; and when the ratio was in the range less than 0.6, the signal integrity of servo signals was evaluated as "C". Note that only the servo signals evaluated as "A" is usable. The results are shown in Table 1.

In addition to the signal integrity of servo signal, servo position error signals (PES) were evaluated. For an apparatus for the evaluation, BitFinder manufactured by International Manufacturing & Engineering Services Co., Ltd. was used. The above mentioned GMR head was mounted in a VCM mode to evaluate servo tracking performance. Position error signals (PES) was measured in a state of servo tracking. From measurements of PES of each sector for 50 rotations, the standard deviation (σ) of PES was calculated. When 3σ value was less than 15% of the track pitch (TP), the servo position error signal was evaluated as "A", and when 3σ value is 15% or more, the servo position error signal was evaluated as "C".

### - (2) Processing precision of convex portions in magnetic layer -

Uniformity of the widths of convex portions in each of the magnetic layers was evaluated for the pattern corresponding to data areas using an AFM (Dimension 5000, manufactured by Veeco Instruments). The evaluation was carried out within a range of 1 µm square to retrieve data on the convexo-concave pattern on each of the surfaces of the magnetic layers. A threshold was set at 80% of the height of the pattern composed of convex portions on each of the processed magnetic layers, and dimensional variations in the side surface area of a convex portion formed when the convex portion was sliced with the threshold were evaluated using a standard deviation (in visual field of 1 µm square). In each of the magnetic layers, 16 points in a circumference at a radius of 25 mm of the disc at generally equiangular spacing were measured to calculate a standard deviation (σ) of dimensions for all the points measured. When 3σ value was 15 nm or less, the precision was evaluated as "A"; and when 3σ value was greater than 15 nm, the precision was evaluated as "C". The results are shown in Table 1.

**Table 1.**

| | Signal Integrity of Servo Signal | a) | Evaluation of PES (%) | a) | Precision of Convex Portions formed on Magnetic Layer (3σ, nm) | a) |
|---|---|---|---|---|---|---|
| Ex. 1 | 0.95 | A | 12 | A | 13 | A |
| Comp. Ex. 1 | 0.12 | C | 19 | C | 21 | C |
| Comp. Ex. 2 | 0.79 | B | 14 | A | 15 | A |

| | | | | | | |
|---|---|---|---|---|---|---|
| a) Evaluation | | | | | | |

## Claims

1. A method for producing a magnetic recording medium having servo areas and data areas using a mold structure having a plurality of convex portions, the method, comprising:
forming an imprint resist layer on a surface of a substrate for the magnetic recording medium,
forming a convexo-concave resist pattern in the formed imprint resist layer by pressing the plurality of convex portions of the mold structure against the imprint resist layer, and
transferring magnetism to the servo areas in the magnetic recording medium by applying a magnetic field to the servo areas via the mold structure,
wherein in the forming of the imprint resist layer, the imprint resist layer is formed only on areas of the substrate surface corresponding to the data areas in the magnetic recording medium, and in the transferring of magnetism, the magnetic field is applied to areas of the substrate surface corresponding to the servo areas in the magnetic recording medium with the areas of the substrate surface corresponding to the servo areas being in contact with the convex portions of the mold structure.

2. The method for producing a magnetic recording medium according to claim 1,
wherein in the transferring of magnetism, the magnetic field is applied to the servo areas and the data areas via the mold structure.

3. The method for producing a magnetic recording medium according to claim 2,
wherein in the transferring of magnetism, the magnetic field is applied to the servo areas and the data areas in a perpendicular direction to the surface of the magnetic recording medium, via the mold structure.

4. The method for producing a magnetic recording medium according to any one of claims 1 to 3, further comprising:
forming a second resist layer on the areas of the substrate surface corresponding to the servo areas in the magnetic recording medium.

5. The method for producing a magnetic recording medium according to claim 4, further comprising:
forming a convexo-concave pattern on the areas of the substrate surface corresponding to the data areas in the magnetic recording medium based on the convexo-concave resist pattern formed on the imprint resist layer on the areas of the substrate surface corresponding to the data areas in the magnetic recording medium, using as a mask the second resist layer coating the areas of the substrate surface corresponding to the servo areas in the magnetic recording medium.

6. A magnetic recording medium produced by the method for producing a magnetic recording medium according to any one of claims 1 to 5.

7. A mold structure used in the method for producing a magnetic recording medium according to any one of claims 1 to 5.
